# EUROPEAN PATENT APPLICATION

(11) **EP 2 207 137 A1**
(43) Date of publication of application: **14.07.2010**
(21) Application number: 08833226.7
(22) Date of filing: 24.09.2008
(51) Int. Cl.: G06T 1/00

(54) **MOTIONLESSNESS DECIDING METHOD AND DEVICE FOR PHOTOGRAPH OBJECT**

(30) Priority: 28.09.2007 JP 2007253795
(71) Applicant: Hitachi Software Engineering Co., Ltd., Shinagawa-ku Tokyo 140-0002 (JP)
(72) Inventor: TSUKIORI, Mitsuharu, Tokyo 140-0002 (JP)
(74) Representative: Liesegang, Eva
(86) International application number: PCT/JP2008/067135
(87) International publication number: WO 2009/041403

(57) **Abstract**

For an image of an object for use in biometrics and the like, if the imaging object is still is detected with a simple configuration. From two pieces of image data that have been captured in time series, the absolute value of the difference in brightness of pixels in the identical position is calculated, and the number of pixels whose absolute values exceed the threshold value indicative of the limit of the brightness change is counted. The counted result is compared with the movement determination threshold value to determine if the imaging object is still.

## Description

### Technical Field

The present invention relates to a method and apparatus for quickly determining if an object imaged with a camera is still.

### Background Art

In recent years, apparatuses that identify individuals by means of images of part of living organisms have been spreading. Among such apparatuses is an apparatus that extracts features of a living organism by irradiating part of the living organism with near infrared rays and capturing an image of the consequent transmitted rays or reflected rays.

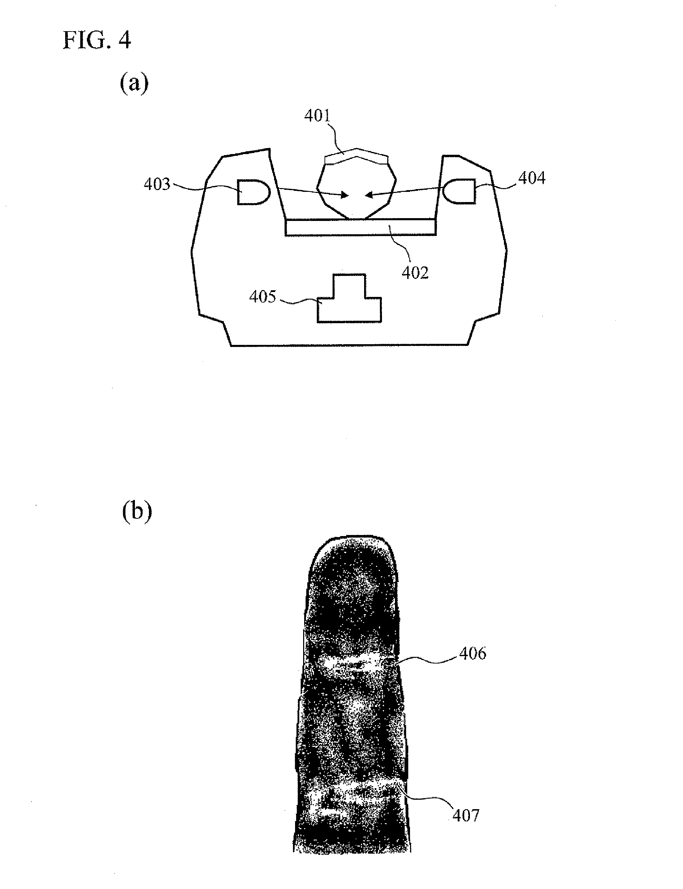

FIG. 4A is a cross-sectional structural view showing an example in which an image of a living organism, specifically, a pattern of finger blood vessels is captured without contact.

The apparatus includes a finger-holding base 402 for holding a finger 401 that is an imaging object, infrared light sources 403 and 404 that irradiate the finer 401 placed on the finger-holding base 402 with rays, and a camera 405 that captures an image of the finger 401 placed on the finger-holding base 402. Upon irradiation of the finger 401 with infrared rays from opposite sides of the finger 401, the infrared rays that are passing through the finger 401 become saturated in the finger. Such saturated rays (image) are captured with the camera 405. A region that can be imaged with the camera 405 includes, as shown in FIG. 4B, a region from the first joint 406 to the second joint 407 of the finger 401.

When an image of a living organism is captured as described above, it is important that imaging be performed while the living organism is still. If an image of a living organism is captured while it is not still, there is a possibility that features of the living organism may be lost due to shake or the like, which could degrade the accuracy of authentication.

As a method for determining if an imaging object is still, there is known a method that includes continuously capturing images of an object, extracting contours thereof, and detecting changes in the contours.

Among conventional techniques that determine if an object has been still for a predetermined period of time is a technique disclosed in Patent Document 1 below.
Patent Document 1: JP Patent Publication (Kokai) No. 2005-349192 A

### Disclosure of the Invention

### Problems to be Solved by the Invention

However, the conventional technique that includes continuously capturing images of an object, extracting contours thereof, and detecting changes in the contours would require an enormous amount of image processing. Further, if the contour of the imaging object is not sharp, the contour may be erroneously extracted, which could result in an incorrect determination of if the object is still.

It is an object of the present invention to provide a method and apparatus for determining if an imaging object is still, which is capable of determining, even when the contour of the imaging object is not sharp, if the object is still through simple processing.

### Means for Solving the Problems

In order to achieve the aforementioned object, a method for determining if an imaging object is still in accordance with the present invention is a method that determines if an imaging object is still with determination means, based on two images of the object that have been captured with imaging means in time series, the method comprising the following steps performed by the determination means: a first step of calculating the absolute value of the difference in brightness of pixels in the identical position of the two images, a second step of comparing the calculated absolute value of the difference of the pixels with a threshold value indicative of the limit of the brightness change, a third step of counting the number of pixels whose absolute values exceed the threshold value indicative of the limit of the brightness change, and a fourth step of determining if the imaging object in the second image of the two images, which has been captured at a later timing than the first image, is still depending on whether a count value counted in the third step exceeds a stillness determination threshold value or not.

An apparatus for determining if an imaging object is still in accordance with the present invention is an apparatus for determining if an imaging object is still based on two images of the object that have been captured with imaging means in time series, the apparatus comprising: first means for calculating the absolute value of the difference in brightness of pixels in the identical position of the two images, second means for comparing the calculated absolute value of the difference of the pixels with a threshold value indicative of the limit of the brightness change, third means for counting the number of pixels whose absolute values exceed the threshold value indicative of the limit of the brightness change; and fourth means for determining if the imaging object in the second image of the two images, which has been captured at a later timing than the first image, is still depending on whether a count value counted by the third means exceeds a stillness determination threshold value or not.

### Advantageous Effects of the Invention

According to the present invention, difference in brightness of pixels can be obtained through simple processing each time captured images are obtained. Accordingly, if an imaging object is still can be determined. Thus, imaging of a living organism that is surely in a still state is possible even when a living organism imaging apparatus with a low-throughput microcomputer is used.

### Brief Description of the Drawings

FIG. 1 is a functional configuration diagram showing an embodiment of a stillness detection unit of a living organism imaging apparatus.
Fig. 2 is a flow chart showing the processing for detecting if an imaging object is still and imaging the object.
FIG. 3 is a flowchart showing the continuation from FIG. 2.
FIGS. 4 show examples of a cross-sectional structural view of a living organism imaging apparatus and an image of a living organism, respectively.

### Description of Symbols

- 101: image data
- 102: image data receiving unit
- 103: image counter
- 104: image data region 1
- 105: image data region 2
- 106: pixel data extraction unit 1
- 107: pixel data extraction unit 2
- 108: pixel-extraction-position determination unit
- 109: difference calculation unit
- 110: difference exceedance counter
- 111: difference determination unit
- 112: movement detection signal
- 113: stillness detection signal
- 114: exceedance limit value for the image difference

- 115: pixel difference threshold value
- 116: pixel extraction stop signal

### Best Modes for Carrying Out the Invention

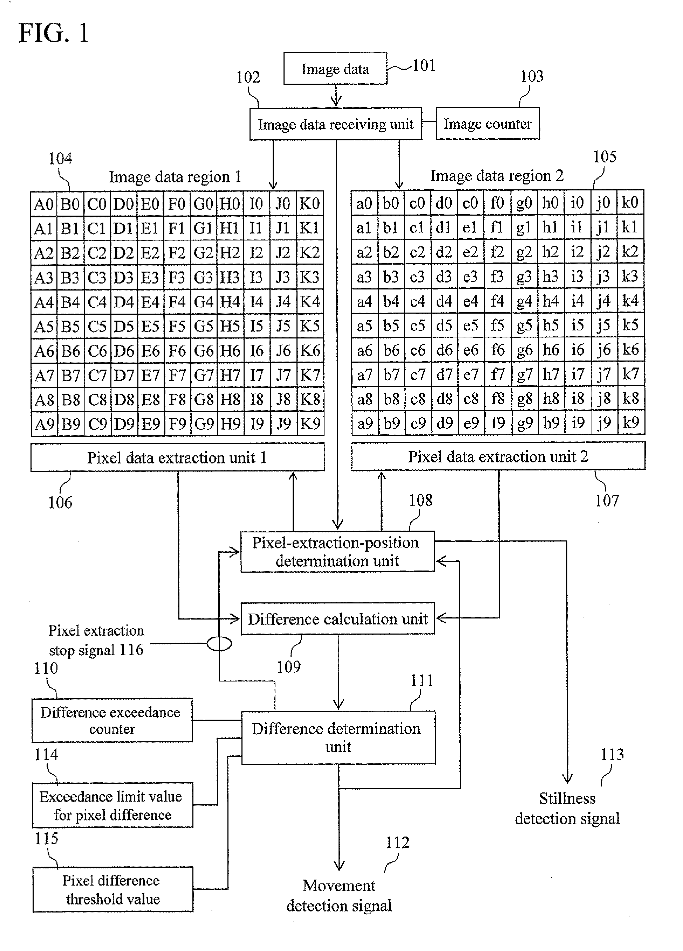

FIG. 1 is a functional configuration diagram showing an embodiment of a stillness detection unit of a living organism imaging apparatus that uses a stillness detection method in accordance with the present invention.

This embodiment shows a configuration in which image data composed of, for example, 10 x 10 pixels is used to determine if an imaging object (e.g., a finger) is still.

The image data 101 is image data of 10 x 10 pixels that has been imaged with a CMOS sensor or the like, and is inputted to an image data receiving unit 102.

An image counter 103 is provided for the image data receiving unit 102. Each time the image data receiving unit 102 receives image data of 10 x 10 pixels of a living organism that have been serially captured at different moments in time, the count value is incremented by one.

The image data receiving unit 102 transfers image data captured at timings t and t + 1 to, when the image counter 103 has registered an even number, an image data region 104, and to, when the image counter 103 has registered an odd number, an image data region 105. At the transfer timing, a difference exceedance counter 110 is set to zero.

Upon completion of the transfer of the image data by the image data receiving unit 102, a pixel-extraction-position determination unit 108 is activated.

The pixel-extraction-position determination unit 108 instructs pixel data extraction units 106 and 107 to extract a pixel A0 in the image data region 104 and a pixel a0 in the image data region 105, respectively.

Each of the pixel data extraction units 106 and 107 extracts pixel data in the instructed position and transmits the data to a difference calculation unit 109.

The difference calculation unit 109 determines the absolute value of the difference in brightness of the pixel A0 and the pixel a0, and transmits it to a difference determination unit 111.

The pixel difference threshold value 115 is the threshold value for determining if there is a change in brightness between the two pixels. The pixel difference threshold value 115 is set at a predetermined value according to an imaging object.

The exceedance limit value 114 for the pixel difference is the limit value for determining if an imaging object is still based on the number of pixels whose brightness has changed. The exceedance limit value 114 is set at a predetermined value according to an imaging object. When the number of pixels whose brightness has changed is below the exceedance limit value 114 for the pixel difference, the imaging object is determined to be still.

The difference determination unit 111 compares the absolute value of the difference in brightness of the pixels in the identical position with the pixel difference threshold value 115. If the absolute value of the difference in brightness of the pixels in the identical position is greater, the difference determination unit 111 increments the difference exceedance counter 110 by "1" and compares it with the exceedance limit value 114 for the pixel difference. If the count value of the difference exceedance counter 110 and the exceedance limit value 114 for the pixel difference are the same value, the difference determination unit 111 determines that the object is not still, and thus outputs a movement detection signal (non-still-state detection signal) 112, and instructs the pixel-extraction-position determination unit 108 to stop the operation.

The pixel-extraction-position determination unit 108 continues to determine a pixel extraction position and informs the pixel data extraction units 106 and 107 of the position. In determination of the pixel extraction position, interlacing of vertical lines or horizontal lines is performed, so that the entire image can be scanned through a small number of extraction steps.

Described now is a case in which interlaced scanning of vertical lines is performed.

In the image data region 104, A0, A1, A2...A9 are sequentially extracted. In the corresponding image data region 105, a0, a1, a2...a9 are extracted.

Next, two vertical lines are skipped, and D0 to D9 are extracted from the image data region 104, while d0 to d9 are extracted from the image data region 105.

Further, another two vertical lines are skipped, and G0 to G9 are extracted from the image data region 104, while g0 to g9 are extracted from the image data region 105.

The next two vertical lines are also skipped, and J0 to J9 are extracted from the image data region 104, while j0 to j9 are extracted from the image data region 105.

If the next two lines are skipped, the scanned region can fall out of the right edge. Thus, a line on the right side of the initially extracted line A0 to A9 in the image data region 104, i.e., B0 to B9 are extracted. Correspondingly, b0 to b9 in the image data region 105 are extracted.

Similarly, with every two lines skipped, E0 to E9, H0 to H9, K0 to K9, C0 to C9, F0 to F9, and I0 to 19 are sequentially extracted from the image data region 104, while e0 to e9, h0 to h9 ,k0 to k9, c0 to c9, f0 to f9, and i0 to i9 are sequentially extracted from the image data region 105, so that extraction of all of the pixels is completed.

Extracting pixels by interlacing as described above allows detection of if a target living organism is still through a small number of extraction steps. Lines that are interlaced need not be lines in the vertical direction, and can be lines in either the horizontal direction or diagonal direction, i.e., lines in any direction can be selected.

Further, extraction of pixels need not be performed by line interlacing. That is, pixels can be extracted in a given order.

Each of the extracted pixel data is transmitted to the difference calculation unit 109 where the absolute value of the difference in brightness of pixels in the identical position in the two pieces of image data is determined, and the value is transmitted to the difference determination unit 111.

The difference determination unit 111 compares the difference in brightness of the pixels transmitted from the difference calculation unit 109 with the difference threshold value 115. If the difference threshold value 115 is smaller, the difference determination unit 111 increments the difference exceedance counter 110.

Upon increment of the difference exceedance counter 110, the difference determination unit 111 compares the value of the difference exceedance counter 110 with the exceedance limit value 114 for the pixel difference. If the value of the difference exceedance counter 110 is greater, the difference determination unit 111 determines that the imaging object is not still, whereupon it instructs the pixel-extraction-position determination unit 108 to stop the operation, and outputs the movement detection signal 112.

If no movement detection signal is outputted until all of the pixel data have been extracted, the pixel-extraction-position determination unit 108 determines that the object is still, and thus outputs a stillness detection signal 113 and thereafter stops the operation.

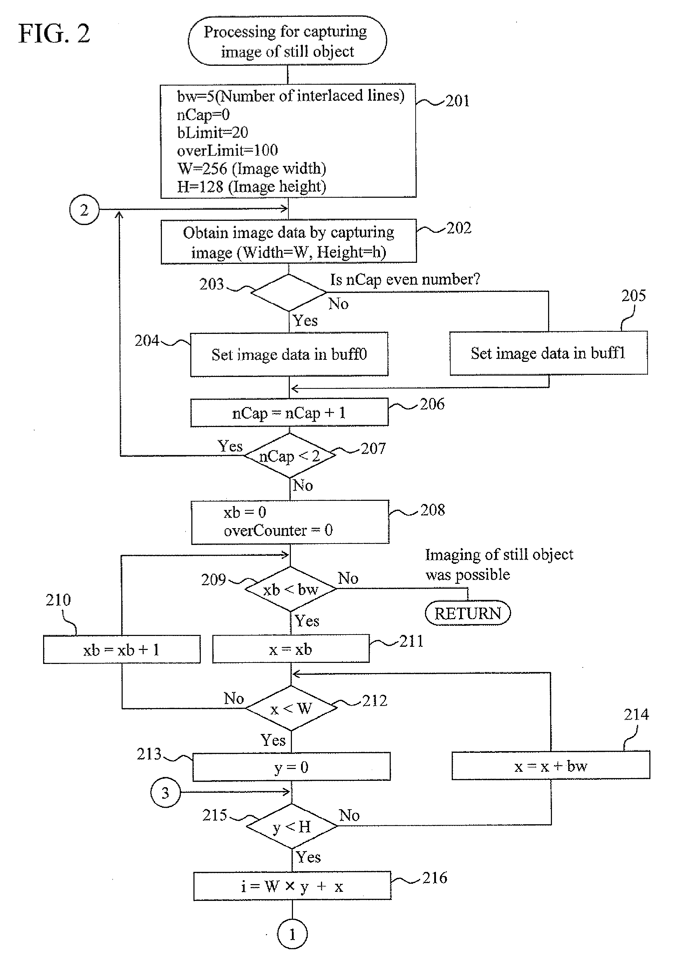

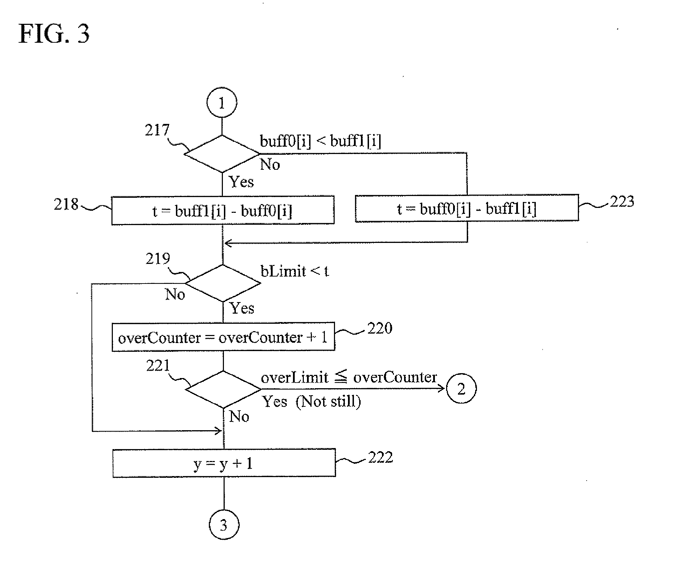

FIG. 2 and FIG. 3 are flow charts for capturing an image of a still object with a living organism imaging apparatus that uses a stillness determination method in accordance with the present invention. In this case, the entire image data region is scanned by performing interlacing of vertical lines.

First, in step 201, a region necessary for the processing is initialized.

Symbol "bw" represents the number of interlaced lines. For example, "bw" is set at "5." By such setting, interlaced scanning is performed for every five lines such that 0th, 5th, and 10th vertical lines are sequentially scanned.

Symbol "nCap" represents the number of the captured image.

Symbol "bLimit" represents the threshold value for the difference in brightness of the image data in the identical pixel position, and corresponds to numeral 115 in FIG. 1.

Symbol "overLimit" represents the limit value for determining if an imaging object is moving, and corresponds to numeral 114 in FIG. 1.

Next, in step 202, image data is obtained by capturing an image with the control of a CMOS sensor and the like. It is assumed that the image data obtained herein has W Dots (width) x H dots (height).

Next, in step 203, the storage destination of the image data is determined based on nCount. That is, if nCap indicates an even number, the image data is stored in an image buffer region buff0 (step 204), and if not, it is stored in buff1 (step 205).

Next, in step 206, the image counter is incremented by "1." Then, in step 207, it is determined if at least two images have been captured in the past. If the number of the captured images is determined to be less than two, the flow returns to step 202 for capturing an image.

In step 208, initialization processing for scanning pixels in the image buffer regions buff0 and buff1 is performed. That is, a scan origin point in the x direction is set as xb. In addition, the value of overCounter that counts the number of times the difference in brightness of two pixels has exceeded bLimit is set at "0." Symbol "overCounter" corresponds to numeral 110 in FIR. 1.

Next, in step 209, it is determined if all of the pixels of the image data have been scanned. If the overCounter has exceeded the overLimit during the scan operation, the object is determined to be "not still" at that time. Thus, the fact that all of the pixels have been scanned means that "imaging of a still object was performed."

In step 211, the x-coordinate for scanning a vertical line is initialized.

In step 212, it is determined if scanning of the vertical line has been completed. If the scanning is determined to be complete, step 210 is executed to increment the x-coordinate of the next scan-start position. Then, the flow returns to step 209.

In step 213, the y-coordinate for scanning a vertical line is set.

In step 215, it is determined if scanning of one vertical line has been completed. If the scanning is determined to be complete, step 214 is executed to set the x-coordinate for scanning the next vertical line.

If the vertical line is being scanned in step 215, the position of the pixel is calculated based on x and y at that time in step 216.

In step 217, pixel data in the identical position are extracted from the two pieces of image data, and the magnitude relationship between the brightness values of such pixel data is determined. If the brightness of the pixel extracted from the image buffer region buff1 is higher, step 218 is executed, and if not, step 223 is executed, so that the absolute value of the difference in brightness of the pixels in the identical position of the two pieces of image data is calculated.

In step 219, it is determined if the absolute value of the difference in brightness calculated in step 218 or step 223 exceeds the bLimit. If the answer to step 219 is Yes, the overCounter is incremented in step 220. Further, in step 221, it is determined if the overCounter exceeds the overLimit. If the answer to step 221 is Yes, the object is determined to be not still, and the flow returns to step 202 for capturing the next image.

In step 222, the y position for scanning the next vertical line is calculated.

## Claims

1. A method for determining if an imaging object is still with determination means, based on two images of the object that have been captured with imaging means in time series, the method comprising the following steps performed by the determination means:
a first step of calculating an absolute value of a difference in brightness of pixels in the identical position of the two images;
a second step of comparing the calculated absolute value of the difference of the pixels with a threshold indicative of a limit of a brightness change;
a third step of counting the number of pixels whose absolute values exceed the threshold value indicative of the limit of the brightness change; and
a fourth step of determining if the imaging object in the second image of the two images, which has been captured at a later timing than the first image, is still depending on whether a count value counted in the third step exceeds a stillness determination threshold value or not.

2. An apparatus for determining if an imaging object is still based on two images of the object that have been captured with imaging means in time series, the apparatus comprising:
first means for calculating an absolute value of a difference in brightness of pixels in the identical position of the two images;
second means for comparing the calculated absolute value of the difference of the pixels with a threshold value indicative of a limit of a brightness change;
third means for counting the number of pixels whose absolute values exceed the threshold value indicative of the limit of the brightness change; and
fourth means for determining if the imaging object in the second image of the two images, which has been captured at a later timing than the first image, is still depending on whether a count value counted by the third means exceeds a stillness determination threshold value or not.
